# EUROPEAN PATENT SPECIFICATION

(11) **EP 0 404 573 B1**
(45) Date of publication and mention of the grant of the patent: **01.06.1994**
(21) Application number: 90306801.3
(22) Date of filing: 21.06.1990
(51) Int. Cl.: B01D 35/027, B67D 3/00

(54) **Water dispenser**
Wasserspender
Dispenseur d eau

(30) Priority: 22.06.1989 AU 4848/89
(43) Date of publication of application: 27.12.1990
(73) Proprietor: WATERWIZE FILTERS PTY. LIMITED, Rowville, Victoria 3178 (AU)
(72) Inventor: Robertson, Mervyn Frank Arthur, Fitzroy, Victoria 3065 (AU)
(74) Representative: Jones, Colin

(56) References cited:
- DE-A- 2 809 321
- DE-C- 762 759
- US-A- 4 024 991
- US-A- 4 658 870
- US-A- 4 834 267

## Description

### Water Dispenser.

This invention relates to a water dispenser incorporating a filter.

Conventionally water dispensers have incorporated a reservoir which is normally made of stainless steel and which is adapted to receive the neck of a bottle which is full of water, the bottle normally being supported not by the reservoir itself, but by a casing which surrounds the reservoir.

The neck of the bottle extends into the reservoir and water leaves the bottle and enters the reservoir until the neck is below the level of the water in the reservoir and, at this time, the water which can leave the bottle is restricted as the pressure of the air in the bottle is reduced.

On water being removed from the reservoir, through an outlet thereof, then further water can leave the bottle and air can enter the bottle to equalize the pressure therein.

The bottles for such dispensers have normally been provided to the users with their necks sealed and are either treated water or water obtained from non-polluted sources.

More recently, the present inventor has proposed the use of refillable bottles which can be filled from the normal town supply by way of an external filter so that the water in the bottle has passed through one or more stages of filtration prior to being passed thereto. Water dispensers which operate in this way have been commercially successful and the cost of water is substantially less than purchasing filled bottles of water.

Both forms of water dispenser suffer from a disadvantage in that it is necessary to handle relatively heavy full bottles of water which have to be inverted so that their necks are located in the reservoir of the water cooler. Further, there is often a space problem in storing full and empty bottles of water and, should deliveries be missed or there be an unexpected demand, the user can run out of water.

Further, both forms of water dispenser use water which contains no sterilizing agent, such as chlorine, or from which such agents have been removed and consequently there is a danger of introducing bacteria into an environment easily colonised by bacteria, whilst the bottle is being handled into position and subsequently when unfiltered air is admitted to the bottle as water is used therefrom.

It is an object of the present invention to provide a water dispenser which solves the above mentioned problems and ensures that filtered water having no sterilizing agent, or from which the sterilizing agent has been removed, is stored in a closed environment and, preferably, at a low temperature which is not conducive to the growth of bacteria.

US-A- 4834267 discloses a water dispenser of the kind comprising a water source, a filter and a reservoir having an outlet. The water source, namely an inverted bottle, is sealed to the reservoir and the filter is arranged to filter air which enters the reservoir and displaces the water from the inverted bottle as water is drawn off from the reservoir.

A water dispenser of the above kind is, in accordance with the invention, characterised in that the filter is located in the reservoir in demountably sealed relation thereto so that water can only enter the reservoir through an outlet of the filter and leave the reservoir through the outlet from the reservoir, and in that the water source is in the form of an open-topped container in demountably sealed connection with an inlet to the filter.

The filter may preferably have a diameter substantially greater than its height.

In one particular form, the filter is substantially cylindrical in form and has an internal cylindrical wall to provide an annulus adjacent the outer edge thereof, the annulus being filled with a filter material or materials and having at least one water inlet from the inner portion of the filter and one water outlet spaced therefrom a distance sufficient to provide a satisfactory path through the filter medium.

In another form of the invention, the path may be a spiral and in a still further form the path may be effectively radial.

Preferably the filter may be provided with a connector on its upper surface and the container, which may be a plastic or glass bottle with which the filter is to be used is provided with a mating connector on its lower surface, water being provided to the dispenser by being passed into the top of the container.

The invention is further described, by way of example, with reference to the accompanying drawings, in which:-
Fig. 1 is a largely schematic view of a water cooler which has a filter of the invention associated therewith;
Fig. 2 is a section through the upper portion of the reservoir of the water cooler of Fig. 1 and the filter located therein;
Fig. 3 is a section of the filter shown in Fig. 2 along line 3/3 of Fig. 2;
Fig. 4 is an underneath, partly broken, perspective of the filter of Figs. 2 and 3; and
Fig. 5 is a section similar to that of Fig. 2 of an alternative form of filter.

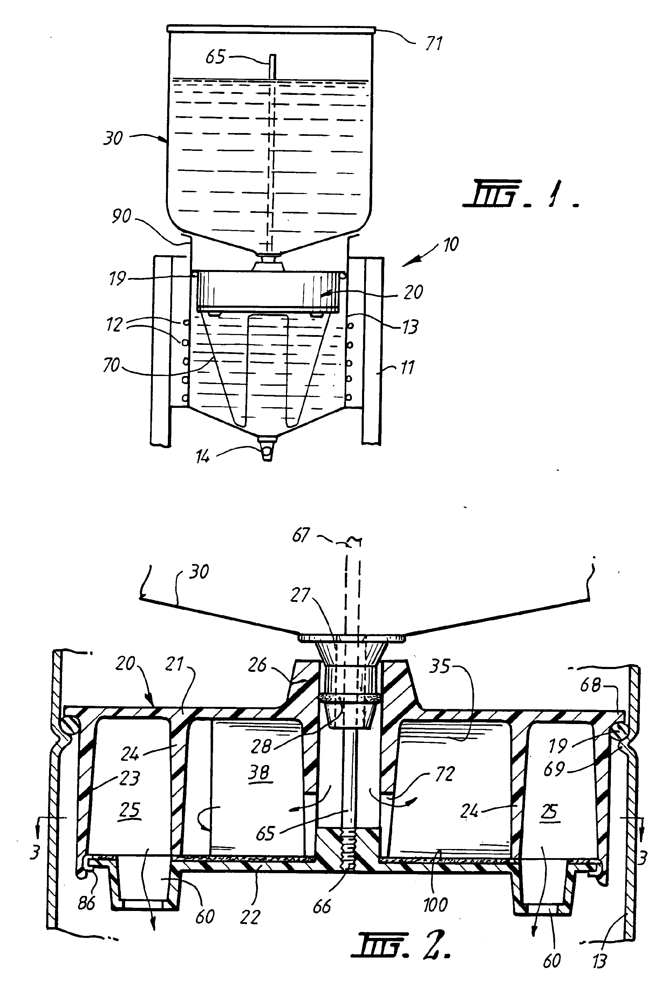

The water dispenser 10 illustrated in Fig. 1 can be considered to be substantially conventional in that it comprises a casing 11 in which there is located a refrigeration unit adapted to chill water. The refrigeration unit has a cooling coil 12 about a open topped cylindrical reservoir 13 having an outlet 14. The reservoir 13 is adapted to receive water from a bottle 30 of water.

The cooling coils 12 act to cool the water in the reservoir 13.

The neck 27 of the bottle differs from those of previous bottles used with water fillers in that it is formed to inter-engage with an inlet 26 of a filter 20, which will be described hereinafter, and which makes a seal therewith, preferably by the location of an O-ring 28 on the neck.

It is preferred that the weight of the bottle not be carried by the filter so a skirt 90 which receives and supports the bottle when it is located is provided either as an extension of the reservoir or attached to the casing. The weight of the bottle acts to retain the filter against upward movement.

The filter unit 20 is located in the reservoir 13 of the cooler unit.

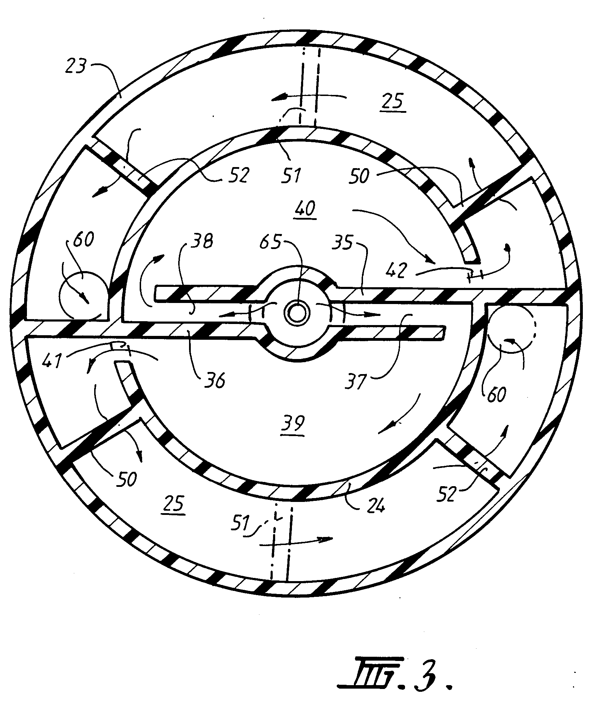

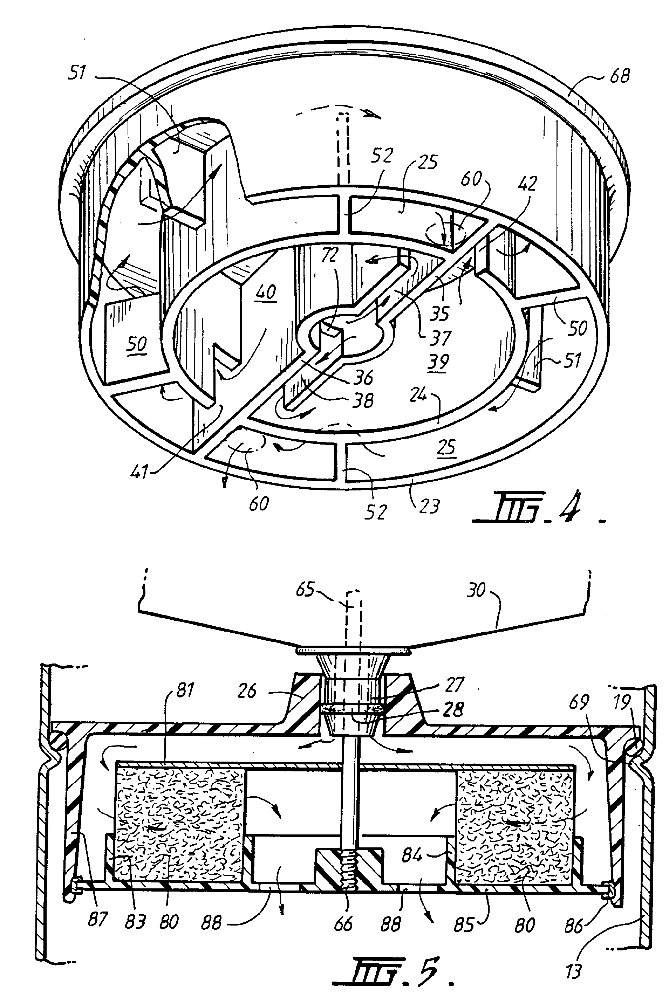

The filter unit 20 is cylindrical in form and has an outer diameter substantially similar to the inner diameter of the reservoir 13 and is provided with means whereby a seal is made between the filter and the reservoir. This seal may be a peripheral O-ring 19 but could be some other form of seal. As shown in Figs. 2 and 5, the O-ring 19 can be located between an annular flange 68 at the upper end of the filter and a formed portion 69 of the reservoir 13 or, as shown in Fig. 1, may be located beneath an annular flange 68 in a reservoir which does not have a formed portion 69. This enables the filter unit to be used with conventional water dispensers.

If the reservoir is provided with a formed portion 69 then the filter may be supported in the reservoir by the inter-engagement between the flange 68 and the portion 69. If not, and specifically when the invention is to be provided for existing dispensers, a stand 70, illustrated in Fig. 1 could be used to locate the filter.

Referring to Figs. 2 to 4 the filter 20 may be made of a synthetic plastics material and is cylindrical in form and can be deemed to have a top member 21 a bottom member 22 and an outer peripheral wall 23.

Internally there may be a spaced peripheral annular wall 24 which, together with the wall 23 forms an annular volume 25 about the outer edge of the filter.

The bottom member 22 may inter-engage with the wall 23 and a gasket 100 can be provided on the upper surface of the bottom member to form a seal with the annular wall 24 and other components within the filter which will be described hereinafter.

The filter is provided with an inlet portion, which is adapted to receive the corresponding part of the bottle neck as described hereinbefore.

As can well be seen from Figs. 3 and 4 the central portion of the body may have a pair of wall members 35 and 36 which form a pair of passages 37, 38 which open respectively into a volume 39, 40.

In the volume 39 there is an aperture 41 which enters into the annular portion and in the volume 40 there is an aperture 42.

As can be seen from Fig. 3 the wall members 35 and 36 effectively divide the filter into two mirror image parts. These are effectively identical.

Across each part there are three walls 50, 51 and 52 and the walls 50 and 52 reach to the bottom of the filter whereas the wall 51 terminates above the bottom but reaches to the top.

These three wall members divide the arcuate semi-circle in such a way that liquid entering through, say, the aperture 41 must adopt a tortuous path where it passes over wall 50, under wall 51 and over wall 52 before it leaves the filter through outlet 60.

Referring, for example, to the lower part of Fig. 2, the compartments defined by the semi-circular portion of the filter and between the walls 36, 50, 51 and 52 and also the volume 39 can be filled with a filter medium or media and the type of medium or media selected will, to a certain extent, depend upon the water to be used.

In some areas the water may have a high solid content, in others the solid content may be low but there may be a substantial amount of bacteriological contamination or, in others, the water might be heavily chlorinated.

For example, if the water is highly mineralised and ion exchange resins are used the volume 39, best seen in Figs. 3 and 4, may be filled with the first resin, the area defined between wall 36 and 51 the second resin and that between wall 51 and 35 with granular activated carbon.

For different conditions, where the removal of organic materials is the principal requirement, the volume 39 may be filled with a particulate filter material and the annular portion with granular activated carbon.

For conditions where only non-potable water is available, a combination of specialised demand release iodine crystals and granular activated carbon can be used.

The filter medium selected would be one which gave the best results with the particular expected water and the type of media in different compartments could be varied.

The medium or media in the other half of the annulus is the same as in the half described.

As can be seen in Fig. 2, the filter is provided with a vent tube 65 which opens at its lower end 66 into the reservoir and at its upper end 67 into the bottle above the normal water level therein.

The arrangement of this invention differs from conventional water dispenser in that the water bottle is not removed for refilling but rather may be open at its upper end and may have a closure 71 thereon.

Alternatively, there may simply be a filling aperture formed in the upper end with a plug or some other form of closure.

In use water is passed into the bottle 30 and this passes through the neck 27 of the bottle into the passages 37 and 38, into the volumes 39, 40 and through the apertures 41 and 42 into the annular portions of the filter and whilst so passing passes through the filter medium or media therein.

The pressure of the following water ensures that this water passes around the tortuous path through the filter medium in the annular portions and from the apertures 60 into the reservoir.

The breather 65 permits the pressure in the reservoir to be relieved and water flow will continue until the reservoir is full and the filter is full.

As the neck 27 of the bottle is sealed at its connection with the filter and the filter is sealed relative to the reservoir by the O-ring 19 water cannot leave the reservoir other than by the outlet 14.

When the refrigeration unit operates, the cooling coils 12 about the reservoir effect the cooling in a normal way and the refrigeration unit can be thermostated to switch off when the water reaches its required temperature. The water which has passed through the filter is thus retained at a low temperature which inhibits bacterial growth therein.

When water is drawn from the reservoir through the outlet 14 which is in connection with a tap on the exterior of the casing 11, the water is replaced by water entering the filter from the bottle.

When the filter is to be replaced or removed for cleaning it is necessary to disconnect the bottle, and the connection described permits this, and then the filter can be drawn outwardly from the reservoir and either be replaced or cleaned as required.

In order to facilitate such removal when the bottle contains water, a long cylindrical member is placed in the bottle so as to extend over the breather tube 65, which member fits tightly into the internal diameter of the outlet 27 in the bottle, and closes this.

In order to readily remove the filter a tool is passed into the inlet 26 and expanded to engage the surfaces 72 of the filter.

The embodiment of Fig. 5 has a different form of filter whose body is effectively identical to the first form in size and shape and may either be adapted for connection within a reservoir by an inter-engagement between part of the filter and the reservoir or by resting on a stand 70 as described for the first embodiment.

The general connection between the neck 27 of the bottle 30 can be identical to that previously described.

In this form of invention there may be provided a filter medium 80 which is in the form of an annulus and which may have a plate 81 closing one end thereof and the filter media itself may be located between a pair of annular walls 83, 84 which extend upwardly from the floor 85 of the filter unit.

The floor 85 of the filter may interconnect with the wall 87 of the filter and there may be an annular gasket 86 to effect this seal.

If required the filter assembly comprising the filter medium 80 and the plate 81 may be removable and replaceable by removing the filter floor from its connection.

This arrangement differs from that previously described in that the water, when it enters the filter passes over the top of the plate 81 and can pass through the filter media in a substantially radial manner.

The distance which the water passes through the filter media in this embodiment is not as great as in the first embodiment but nevertheless with proper selection of filter medium 80 the contact time can be satisfactory.

The water which passes through the filter medium enters the centre of the filter and can be delivered into the reservoir through outlets 88.

The operation of this form of the invention is effectively identical to that of the previous embodiment, that is once again the water is passed into the bottle 30 it passes through the filter medium 80 into the reservoir 13 until the rservoir and filter are full of water, and again the air in the reservoir can be vented through vent tube 65.

As water is removed from the reservoir by the outlet 14 then further water enters the reservoir after passing through the filter medium.

Whilst two particular arrangements of filter body have been described, these can vary depending upon the degree of filtration and the overall requirements.

For example, should it be necessary that there be a longer period of contact, the full length of the annulus previously described can be used or a spiral could be formed in the filter body so that water passes along the spiral before delivery. Alternatively, where a relatively high throughput with restricted filtering is required, the annulus could be divided into more than two sections.

## Claims

1. A water dispenser (10) comprising a water source (30), a filter (20) and a reservoir (13) having an outlet (14), characterized in that the filter (20) is located in the reservoir (13) in demountably sealed relation thereto so that water can only enter the reservoir through an outlet (60) of the filter and leave the reservoir through the outlet (14) from the reservoir (13), and in that the water source (30) is in the form of an open-topped container in demountably sealed connection with an inlet (26) to the filter (20).

2. A water dispenser as claimed in claim 1, in which the water source (30) is an open-topped inverted bottle (71) or the like having a neck (27) which is so formed as to be engageable with the filter inlet (26).

3. A water dispenser as claimed in claim 1 or 2, in which a breather (65) is provided from region of the outlet (88) of the filter through the inlet (26) thereof to a position above the normal level of water in the water source (30).

4. A water dispenser as claimed in claim 1, 2 or 3, in which the filter (20) has an outer periphery which is complementary in shape to the reservoir (13) and the filter comprises a body (21,22,23) having said filter inlet (26) to which the water source (30) can be connected and having said filter outlet (60) into the reservoir (13), and a filtration medium or filtration media in the filter body, through which medium or media water from the filter inlet (26) must pass, means (69 or 70) being provided to locate the body (21,22,23) in the reservoir (13).

5. A water dispenser as claimed in claim 4, in which the filter body (21,22,23) is located adjacent the upper end of the reservoir (13).

6. A water dispenser as claimed in claim 4 or 5, in which means (19) are provided about the periphery of the filter body (21,22,23) to effect a seal with the wall of the reservoir (13).

7. A water dispenser as claimed in any one of claims 2 to 6, in which the filtration medium is located in the form of a closed annulus (25) about the periphery of the body (21,22,23).

8. A water dispenser as claimed in claim 7, in which the filter body (21,22,23) is formed to cause the water to effect a tortuous path through the medium.

9. A water dispenser as claimed in claim 7 or 8, in which the annulus (25) and a central region (39) of the filter body are divided in at least one plane (35,36) to provide at least two water paths.

10. A water dispenser as claimed in any of claims 7 to 9, in which there is at least one wall (51) across the annulus (25) which does not extend the full height of the annulus and over which the water must pass.

11. A water dispenser as claimed in any of claims 7 to 10, in which there are at least two walls (50,51,52) across the annulus (25) which do not extend the full height of the annulus, each of the walls terminating at a region spaced either from the top or from the bottom of the annulus, whereby water must pass over at least one (50,52) of the walls and under at least one (51) of the walls.

12. A water dispenser as claimed in any of claims 4 to 6, in which the filter medium (80) is formed as an annulus so that the water passes radially through the filter medium.

13. A water dispenser as claimed in claim 12, in which the filter inlet (26) passes to the outer portion of the filter body (20,21,22) and then passes inwardly through the filter medium (80) to the filter outlet (88).

14. A water dispenser as claimed in any of claims 1 to 13, in which the filter (20) is adapted to rest on and be supported by a stand (70) located within the reservoir (13).

15. A water dispenser as claimed in any of claims 1 to 13, in which the filter body (21,22,23) has an extension (68) adapted to co-operate with a corresponding formation (69) in the wall of the reservoir (13).

## Patentansprüche

1. Wasserausgabevorrichtung (10), umfassend eine Wasserquelle (30), einen Filter (20) und ein Reservoir (13) mit einem Auslaß (14), dadurch gekennzeichnet, daß sich der Filter (20) in dem Reservoir (13) in einer abnehmbaren Dichtungsbeziehung zu diesem befindet, so daß Wasser nur durch einen Auslaß (60) des Filters in das Reservoir eintreten und das Reservoir nur durch den Auslaß (14) aus dem Reservoir (13) verlassen kann, und dadurch, daß die Wasserquelle (30) in der Form eines nach oben offenen Behälters in abnehmbarer Dichtungsverbindung mit einem Einlaß (26) in den Filter (20) vorliegt.

2. Wasserausgabevorrichtung nach Anspruch 1, wobei die Wasserquelle (30) eine nach oben offene, umgekehrte Flasche (71) oder ähnliches mit einem Hals (27) ist, der so geformt ist, daß er in den Filtereinlaß (26) eingreift.

3. Wasserausgabevorrichtung nach Anspruch 1 oder 2, bei der eine Ventilationsöffnung (65) vorgesehen ist, die von dem Bereich des Auslasses (88) des Filters durch dessen Einlaß (26) bis zu einer Position oberhalb des normalen Wasserstandes in der Wasserquelle (30) verläuft.

4. Wasserausgabevorrichtung nach Anspruch 1, 2 oder 3, bei der der Filter (20) einen Außenumfang aufweist, dessen Form komplimentär zu dem Reservoir (13) ist, und bei der der Filter folgendes umfaßt: einen Körper (21, 22, 23) mit dem genannten Filtereinlaß (26), an den die Wasserquelle (30) angeschlossen werden kann, und dem genannten Filterauslaß (60) in das Reservoir (13), und ein Filtrationsmedium oder Filtrationsmedien in dem Filterkörper, durch das/die Wasser von dem Filtereinlaß (26) fließen muß, wobei Mittel (69 bzw. 70) vorgesehen sind, um den Körper (21, 22, 23) in dem Reservoir (13) auszurichten.

5. Wasserausgabevorrichtung nach Anspruch 4, wobei sich der Filterkörper (21, 22, 23) am oberen Ende des Reservoirs (13) befindet.

6. Wasserausgabevorrichtung nach Anspruch 4 oder 5, bei der Mittel (19) um den Umfang des Filterkörpers (21, 22, 23) zur Erzielung einer Dichtung zur Wand des Reservoirs (13) vorgesehen sind.

7. Wasserausgabevorrichtung nach einem der vorhergehenden Ansprüche 2 bis 6, bei der das Filtrationsmedium in der Form eines geschlossenen Ringraums (25) den Umfang des Körpers (21, 22, 23) umgibt.

8. Wasserausgabevorrichtung nach Anspruch 7, bei der der Filterkörper (21, 22, 23) so ausgebildet ist, daß das Wasser einen kurvenreichen Weg durch das Medium beschreiben muß.

9. Wasserausgabevorrichtung nach Anspruch 7 oder 8, bei der der Ringraum (25) und ein mittlerer Bereich (39) des Filterkörpers zur Bildung von wenigstens zwei Wasserwegen in wenigstens einer Ebene (35, 36) unterteilt sind.

10. Wasserausgabevorrichtung nach einem der Ansprüche 7 bis 9, bei der wenigstens eine Wand (51) über den Ringraum (25) vorliegt, die nicht bis zur vollen Höhe des Ringes reicht und über die das Wasser fließen muß.

11. Wasserausgabevorrichtung nach einem der Ansprüche 7 bis 10, bei der wenigstens zwei Wände (50, 51, 52) über den Ringraum (25) vorliegen, die nicht bis zur vollen Höhe des Ringraumes reichen, wobei jede der Wände in einem Bereich endet, der einen Abstand von der Oberseite bzw. von der Unterseite des Ringes aufweist, so daß das Wasser über wenigstens einer (50, 52) der Wände und unter wenigstens einer (51) der Wände durchfließen muß.

12. Wasserausgabevorrichtung nach einem der Ansprüche 4 bis 6, bei der das Filtermedium (80) als ein Ringraum ausgebildet ist, so daß das Wasser radial durch das Filtermedium fließen muß.

13. Wasserausgabevorrichtung nach Anspruch 12, bei der der Filtereinlaß (26) zum Außenteil des Filterkörpers (20, 21, 22) und dann nach innen durch das Filtermedium (80) zum Filterauslaß (88) verläuft.

14. Wasserausgabevorrichtung nach einem der Ansprüche 1 bis 13, bei der der Filter (20) auf einem Ständer (70) innerhalb des Reservoirs (13) ruht und von diesem getragen wird.

15. Wasserausgabevorrichtung nach einem der Ansprüche 1 bis 13, bei der der Filterkörper (21, 22, 23) eine Verlängerung (68) aufweist, die mit einer entsprechenden Ausbildung (69) in der Wand des Reservoirs (13) zusammenwirkt.

## Revendications

1. Distributeur d'eau (10) comportant une source en eau (30), un filtre (20) et un réservoir (13) muni d'une sortie d'eau (14), caractérisé en ce que le filtre (20) est logé dans le réservoir (13) d'une manière hermétique démontable de façon à ce que l'eau ne puisse entrer dans le réservoir qu'en passant par une sortie (60) du filtre et ne puisse en sortir qu'en passant par la sortie (14) du réservoir (13), et en ce que la source d'eau (30) se présente sous la forme d'un récipient ouvert vers le haut relié par un raccord hermétique démontable à une arrivée (26) dans le filtre (20).

2. Distributeur d'eau selon la revendication 1, dans lequel la source en eau (30) est une bouteille renversée ouverte vers le haut (71) ou un récipient analogue ayant un goulot (27) pouvant être engagé dans l'arrivée du filtre (26).

3. Distributeur d'eau selon la revendication 1 ou 2, dans lequel il est pourvu une aération (65) allant de la sortie (88) à l'entrée (26) du filtre et se situant au-dessus du niveau normal de l'eau dans la source en eau (30).

4. Distributeur d'eau selon la revendication 1, 2 ou 3 dans lequel le filtre (20) possède une surface dont la forme est complémentaire à celle du réservoir (13), un corps (21, 22, 23) qui comporte ladite entrée (26) à laquelle la source en eau (30) peut être reliée et ladite sortie (60) du filtre au réservoir (13), et un ou des milieux situés dans le corps du filtre au travers duquel ou desquels l'eau provenant de l'arrivée du filtre (26) doit passer, des moyens (69 ou 70) permettant de placer le corps du filtre (21, 22, 23) dans le réservoir (13).

5. Distributeur d'eau selon la revendication 4, dans lequel le corps du filtre (21, 22, 23) avoisine la partie supérieure du réservoir (13).

6. Distributeur d'eau selon la revendication 4 ou 5, dans lequel des moyens (19) sont prévus à la surface du corps du filtre (21, 22, 23) pour réaliser une fermeture hermétique avec la paroi du réservoir (13).

7. Distributeur d'eau suivant l'une quelconque des revendications 2 à 6, dans lequel le milieu de filtrage se présente sous forme d'une couronne fermée (25) située autour du corps du filtre (21, 22, 23).

8. Distributeur d'eau selon la revendication 7, dans lequel le corps du filtre (21, 22, 23) est conçu de manière à faire suivre à l'eau un chemin tortueux à travers le milieu de filtrage.

9. Distributeur d'eau suivant la revendication 7 ou 8, dans lequel la couronne (25) et une partie centrale (39) du corps du filtre sont divisés sur au moins un plan (35, 36) afin de créer deux trajectoires d'écoulement de l'eau.

10. Distributeur d'eau selon l'une quelconque des revendications 7 à 9, dans lequel la couronne (25) comporte au moins une paroi (51) qui est d'une hauteur inférieure à la hauteur totale de la couronne et au dessus de laquelle l'eau doit passer.

11. Distributeur d'eau suivant l'une quelconque des revendications 7 à 10, dans lequel la couronne (25) comporte au moins deux parois (50, 51, 52) d'une hauteur inférieure à sa hauteur totale, l'extrémité de chacune des parois laissant un espace par rapport à la partie supérieure ou inférieure de la couronne, forçant ainsi l'eau à s'acheminer en dessus d'au moins une des parois (50, 52) et en dessous (51) d'au moins une des parois.

12. Distributeur d'eau selon l'une quelconque des revendications 4 à 6, dans lequel le milieu de filtrage (80) se présente sous la forme d'une couronne afin que l'eau puisse le traverser radialement.

13. Distributeur d'eau selon la revendication 12, dans lequel l'arrivée du filtre (26) pénètre dans la partie externe du corps du filtre (20, 21, 22), puis traverse le milieu de filtrage (80) pour rejoindre la sortie du filtre (88).

14. Distributeur d'eau suivant l'une quelconque des revendications 1 à 13, où le filtre (20) est conçu pour reposer sur un support (70) situé à l'intérieur du réservoir (13).

15. Distributeur d'eau selon l'une quelconque des revendications 1 à 13, dans lequel le corps du filtre (21, 21, 23) comporte un prolongement (68) de manière à coopérer avec une forme correspondante (69) dans la paroi du réservoir (13).
